# EUROPÄISCHE PATENTSCHRIFT

(11) **EP 3 233 386 B1**
(45) Veröffentlichungstag und Bekanntmachung des Hinweises auf die Patenterteilung: **08.06.2022**
(21) Anmeldenummer: 15805444.5
(22) Anmeldetag: 03.12.2015
(51) Int. Cl.: B24B 23/02, B24B 23/04

(54) **OPTISCHE ANZEIGEVORRICHTUNGSEINHEIT ZUR VERWENDUNG IN EINER EXTERNEN ANWENDUNGSEINHEIT**
OPTICAL DISPLAY DEVICE UNIT FOR USE IN AN EXTERNAL APPLICATION UNIT
UNITÉ DE DISPOSITIF D'AFFICHAGE OPTIQUE POUR UNE UTILISATION DANS UNE UNITÉ D'APPLICATION EXTERNE

(30) Priorität: 16.12.2014 DE 102014226025
(43) Veröffentlichungstag der Anmeldung: 25.10.2017
(73) Patentinhaber: Robert Bosch GmbH, 70442 Stuttgart (DE)
(72) Erfinder: SCHADOW, Joachim, 70563 Stuttgart (DE); ESENWEIN, Florian, 70771 Leinfelden-Echterdingen (DE); BARTH, Daniel, 70771 Leinfelden-Echterdingen (DE)
(86) Internationale Anmeldenummer: PCT/EP2015/078474
(87) Internationale Veröffentlichungsnummer: WO 2016/096452

(56) Entgegenhaltungen:
- EP-A1- 1 281 486
- EP-A1- 2 072 192
- WO-A1-2014/008627
- WO-A2-2014/179895
- DE-A1-102009 045 946
- DE-A1-102012 105 483
- US-A1- 2005 173 142
- US-A1- 2006 076 385

## Beschreibung

Die Erfindung betrifft eine optische Anzeigevorrichtungseinheit zur Verwendung in einer externen Anwendungseinheit.

### Stand der Technik

DE102012105483A1 offenbart den Oberbegriff des Anspruches 1. Andere Beispiele von Anzeigevorrichtungen oder Beleuchtungsvorrichtungen sind aus der WO2014/008627A1, US2006/076385A1 oder EP1281486A1 bekannt.

### Offenbarung der Erfindung

Eine erfindungsgemäße optische Anzeigevorrichtungseinheit hat den Vorteil, mit verschiedenen externen Anwendungseinheiten, wie beispielsweise einer Handwerkzeugmaschine verbindbar zu sein. Vorteilhafterweise weist mindestens ein erstes Gehäuse eine Beleuchtungsvorrichtung und/oder eine optische Anzeigevorrichtung auf. Somit können vorteilhaft Informationen optisch, beispielsweise einem Anwender der externen Anwendungseinheit angezeigt werden.

Unter einer Beleuchtungsvorrichtung soll insbesondere eine Vorrichtung verstanden werden, die Informationen mittels Aussendung sichtbaren Lichtes visuell anzeigt.

Unter sichtbarem Licht soll hier insbesondere Licht insbesondere mit folgenden Anzeigen verstanden werden:
- Eine Änderung der Lichtfarbe
- Eine Änderung der Lichtintensität
- Lichtpulse unterschiedlicher Länge
- Lichtpulse unterschiedlicher Helligkeit
- Lauflicht mit Änderung der Laufrichtung des Lichts
- Lichtpulse, variierend in Pulsfrequenz und/oder Helligkeit

Unter einer optischen Anzeigevorrichtung soll hier insbesondere eine Vorrichtung verstanden werden, die Informationen mittels einer digitalen Anzeige, eines Displays oder dergleichen visuell anzeigt.

Es wird vorgeschlagen, dass die optische Anzeigevorrichtungseinheit mindestens eine mechanische Schnittstelle zum Verbinden des ersten Gehäuses mit mindestens einem zweiten Gehäuse aufweist. Somit kann die optische Anzeigevorrichtungseinheit besonders vorteilhaft mit einer beliebigen externen Anwendungseinheit verbunden werden.

Unter einer mechanischen Schnittstelle soll hier insbesondere die Berührungsfläche der optischen Anzeigevorrichtungseinheit verstanden werden, die mit einer externen Berührungsfläche in Kontakt kommen kann.

Außerdem wird vorgeschlagen, dass die optische Anzeigevorrichtungseinheit mindestens eine Datenschnittstelle aufweist, die dazu vorgesehen ist, insbesondere eine Information einer externen Elektronikeinheit an die optische Anzeigevorrichtung zu übertragen. Die Datenschnittstelle kann eine UART Schnittstelle oder dergleichen, dem Fachmann als sinnvoll erscheinende Schnittstelle sein oder über SPI, I²C oder dergleichen realisiert sein.

Durch die in den Unteransprüchen angegebenen Merkmale sind vorteilhafte

Weiterbildungen der optischen Anzeigevorrichtungseinheit nach dem Anspruch 1 möglich.

Wie in Anspruch 1 dargestellt, ist das zweite Gehäuse mindestens an einer Handwerkzeugmaschine angeordnet. Somit kann die optische Anzeigevorrichtungseinheit vorteilhafterweise mit einer externen Anwendungseinheit, insbesondere einer Handwerkzeugmaschine verbunden werden. Dies ermöglicht einen modularen Aufbau einer externen Anwendungseinheit, wie zum Beispiel einer Handwerkzeugmaschine. Unter dem Begriff "modularer Aufbau" soll hier ein Aufbau insbesondere nach einem Baukastenprinzip verstanden werden. Das heißt, dass die optische Anzeigevorrichtungseinheit mit einer Vielzahl unterschiedlicher externer Anwendungseinheiten zusammen gebaut werden kann. Dieser modulare Aufbau ermöglicht eine einfache und kostengünstige Montage.

Vorteilhafterweise ist im zweiten Gehäuse mindestens eine externe Elektronikeinheit angeordnet. Die Elektronikeinheit ist vorteilhafterweise dazu vorgesehen, Daten auszuwerten, und/oder mit weiteren Elektronikeinheiten zu kommunizieren.

Vorteilhafterweise ist die optische Anzeigevorrichtungseinheit mit verschiedenen externen Anwendungseinheiten insbesondere lösbar, verbindbar.

Wie in Anspruch 1 dargestellt, weist die Beleuchtungsvorrichtung mindestens eine Lichtquelle und mindestens einen Lichtleiter auf. Somit kann besonders vorteilhaft Licht von einer Lichtquelle mittels Lichtleiter transportiert werden und eine werkzeugnahe Umgebung wie zum Beispiel ein Arbeitsfeld ausgeleuchtet werden. Es ist aber auch denkbar, dass optische Informationen auf die werkzeugnahe Umgebung oder das Werkstück projiziert werden. Unter einer Lichtquelle soll hier insbesondere eine Vorrichtung verstanden werden, die sichtbares Licht aussendet.

Wie in Anspruch 1 offenbart, ist der Lichtleiter als Lichtspange ausgeführt. Somit kann vorteilhaft Licht in einem Winkel a die werkzeugnahe Umgebung ausleuchten. Der Winkel a ist größer 0° und kleiner als 270°.

Vorteilhafterweise weist die Lichtquelle mindestens eine LED auf. In einer vorteilhaften Ausführungsform weist die Lichtquelle eine Vielzahl von LEDs auf.

Die LEDs können in verschiedenen Bauformen und Größen vorgesehen sein.

Die LEDs können verschiedengestaltig am ersten Gehäuse angeordnet sein.

Vorteilhafterweise kann die optische Anzeigevorrichtungseinheit dazu vorgesehen sein, eine die Parameter der externe Anwendungseinheit betreffende Anzeige bereitzustellen.

In der erfindungsgemäßen Ausführungsform weist die optische Anzeigevorrichtungseinheit mindestens eine zweite Elektronikeinheit auf, die dazu vorgesehen, weitere Funktionen zu integrieren.

Wie in Anspruch 1 dargestellt, ist die externe Anwendungseinheit mindestens eine Handwerkzeugmaschine. Die Handwerkzeugmaschine umfasst vorteilhafterweise mindestens eine externe Elektronikeinheit, die dazu vorgesehen ist, einen optischen Parameter bereit zu stellen, der dazu vorgesehen ist, über die Datenschnittstelle übertragen zu werden.

In einer vorteilhaften Ausführungsform ist die Handwerkzeugmaschine als Exzenterschleifer ausgeführt.

In einer weiteren vorteilhaften Ausführungsform ist die Handwerkzeugmaschine als Winkelschleifer ausgeführt.

In einer weiteren vorteilhaften Ausführungsform ist die Handwerkzeugmaschine als Schwing- oder Deltaschleifer ausgeführt.

In einer weiteren vorteilhaften Ausführungsform ist die Handwerkzeugmaschine als oszillierendes Multitool ausgeführt.

In einer weiteren vorteilhaften Ausführungsform ist die Handwerkzeugmaschine als Oberfräse ausgeführt.

Es ist aber auch denkbar, dass die Handwerkzeugmaschine als Geradschleifer, als oszillierendes Multitool, als Stichsäge, als Kreissäge, als Nietgerät, als Bohrhammer oder Schlaghammer, als Bohrmaschine, als Schrauber oder Schlagschrauber oder dergleichen ausgeführt ist.

Weitere Vorteile und zweckmäßige Ausführungen sind der Figurenbeschreibung und den Zeichnungen zu entnehmen.

### Zeichnungen

In den Zeichnungen sind Ausführungsbeispiele einer erfindungsgemäßen optischen Anzeigevorrichtungseinheit sowie die erfindungsgemäßen externen Anwendungseinheiten mit jeweils einer optischen Anzeigevorrichtungseinheit gezeigt.

Es zeigen:
- Figur 1: eine erste Ausführungsform einer erfindungsgemäßen optischen Anzeigevorrichtungseinheit in drei Perspektiven mit einer erfindungsgemäßen externen Anwendungseinheit in schematischer Darstellung,
- Figur 2: eine zweite Ausführungsform der erfindungsgemäßen optischen Anzeigevorrichtungseinheit in schematischer Darstellung,
- Figur 3: eine erste erfindungsgemäße externe Anwendungseinheit mit einer optischen Anzeigevorrichtungseinheit in schematischer Darstellung,
- Figur 4: eine zweite erfindungsgemäße externe Anwendungseinheit mit einer optischen Anzeigevorrichtungseinheit in schematischer Darstellung,
- Figur 4a: die zweite erfindungsgemäße externe Anwendungseinheit mit einer optischen Anzeigevorrichtungseinheit in schematischer Darstellung,
- Figur 5: eine dritte erfindungsgemäße externe Anwendungseinheit mit einer optischen Anzeigevorrichtungseinheit in schematischer Darstellung,
- Figur 6: eine vierte erfindungsgemäße externe Anwendungseinheit mit einer optischen Anzeigevorrichtungseinheit in schematischer Darstellung,

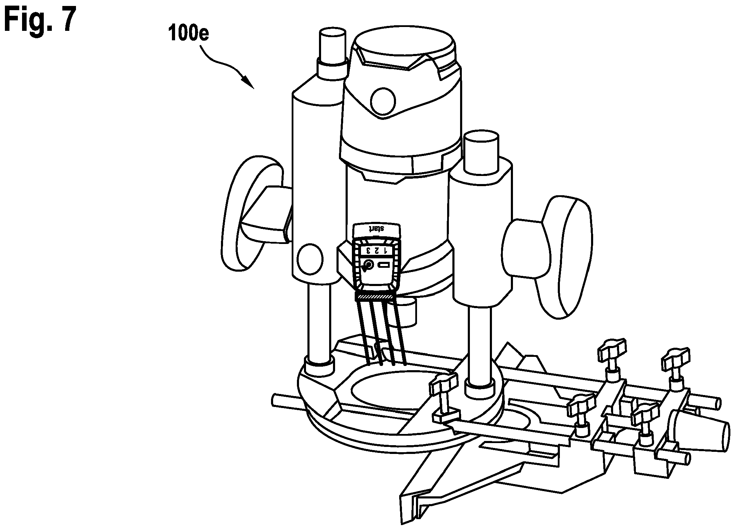

- Figur 7: eine fünfte erfindungsgemäße externe Anwendungseinheit mit einer optischen Anzeigevorrichtungseinheit in schematischer Darstellung.

### Beschreibung

Für die in den unterschiedlichen Ausführungsbeispielen vorkommenden gleichen Bauteile werden dieselben Bezugszahlen verwendet.

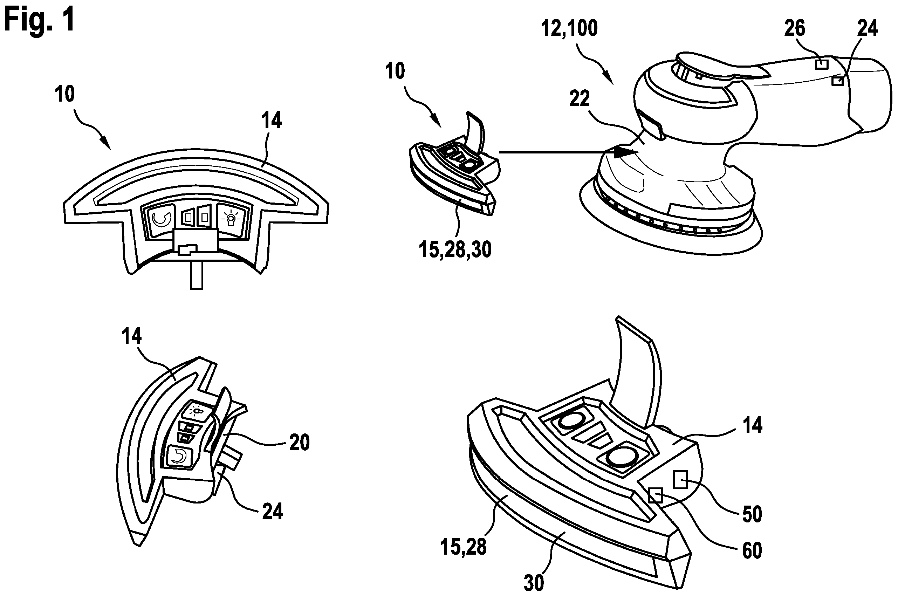

Figur 1 zeigt eine optische Anzeigevorrichtungseinheit 10 in drei Perspektiven. Die optische Anzeigevorrichtungseinheit 10 ist dazu vorgesehen, insbesondere mit einer externen Anwendungseinheit 12 verbunden zu werden. Die optische Anzeigevorrichtungseinheit 10 weist ein erstes Gehäuse 14 auf. Im Ausführungsbeispiel in Figur 1 ist am ersten Gehäuse 14 eine Beleuchtungsvorrichtung 15 angeordnet. Die Beleuchtungsvorrichtung 15 ist dazu vorgesehen, Informationen mittels Aussendung sichtbaren Lichtes visuell anzuzeigen. Insbesondere wird eine Umgebung, insbesondere einen Arbeitsbereich ausgeleuchtet.

Die Beleuchtungsvorrichtung 15 kann folgende Anzeigen realisieren:
- Licht insbesondere mit folgenden Anzeigen
   ∘ Eine Änderung der Lichtfarbe
   ∘ Eine Änderung der Lichtintensität
   ∘ Lichtpulse unterschiedlicher Länge
   ∘ Lichtpulse unterschiedlicher Helligkeit
   ∘ Lauflicht mit Änderung der Laufrichtung des Lichts
   ∘ Lichtpulse, variierend in Pulsfrequenz und/oder Helligkeit

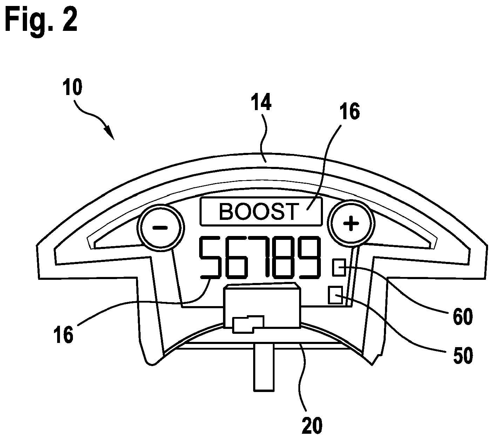

Im Ausführungsbeispiel in Figur 2 ist am ersten Gehäuse 14 eine optische Anzeigevorrichtung 16 angeordnet. Die optische Anzeigevorrichtung 16 ist dazu vorgesehen ist, Informationen mittels einer digitalen Anzeige, eines Displays oder dergleichen visuell anzuzeigen. Ein Display visualisiert Informationen wie Bilder oder Zeichen. Das Display der optischen Anzeigevorrichtung16 zeigt Informationen über Parameter, wie eine Drehzahl, eine Temperatur, eine Modusanzeige oder dergleichen.

Weiterhin ist es denkbar, dass die Beleuchtungsvorrichtung 15 und/oder die optische Anzeigevorrichtung 16 als Projektionsvorrichtung ausgeführt sind, die optische Informationen in eine Umgebung, insbesondere in eine Arbeitsumgebung projizieren.

In der erfindungsgemäßen Ausführungsform weist die optische Anzeigevorrichtungseinheit 10 eine mechanische Schnittstelle 20 zum Verbinden des ersten Gehäuses 14 mit einem zweiten Gehäuse 22. Die mechanische Schnittstelle 18 stellt eine mechanisch feste, jedoch lösbare Verbindung der beiden Gehäuse 14, 22 her.

Die optische Anzeigevorrichtungseinheit 10 umfasst eine Datenschnittstelle 24. Die Datenschnittstelle 24 überträgt eine Informationen, die von einer externen Elektronikeinheit 26 bereit gestellt werden, an die Beleuchtungsvorrichtung 15 und/oder die optische Anzeigevorrichtung 16. Diese Informationen werden visuell in Form von sichtbaren Licht oder einer digitalen Anzeige sichtbar gemacht.

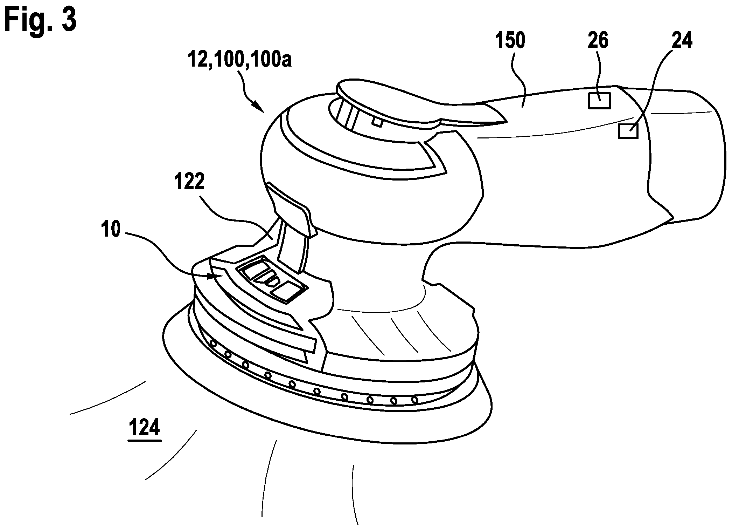

Das zweite Gehäuse 22 ist an einer externen Anwendungseinheit 12 angeordnet. Die externe Anwendungseinheit 12 ist im Ausführungsbeispiel (Figur 1, Figur 3) eine Handwerkzeugmaschine 100. Die optische Anzeigevorrichtungseinheit 10 kann somit an Handwerkzeugmaschinen 100 verschiedenen Typus angebracht werden. Der Vorteil liegt darin, dass die optische Anzeigevorrichtungseinheit 10 an verschiedene, beliebige externe Anwendungseinheiten 24 anbringbar ist und somit flexibel einsetzbar ist.

Das erste Gehäuse 14 ist mit dem zweiten Gehäuse 22 über die mechanische Schnittstelle 20 fest, jedoch manuell werkzeuglos oder durch ein geeignetes Werkzeug lösbar verbunden. Die optische Anzeigevorrichtungseinheit 10 ist somit mit verschiedenen externen Anwendungseinheiten 24, insbesondere lösbar, verbindbar. Dies ermöglicht einen modularen Aufbau einer Werkzeugmaschine. Unter dem Begriff "modularer Aufbau" soll hier ein Aufbau insbesondere nach einem Baukastenprinzip verstanden werden. Das heißt, dass die optische Anzeigevorrichtungseinheit 10 mit einer Vielzahl unterschiedlicher externer Anwendungseinheiten 24 zusammen gebaut werden kann. Dieser modulare Aufbau ermöglicht eine einfache und kostengünstige Montage.

Das zweite Gehäuse22 nimmt die externe Elektronikeinheit 26 auf. Die externe Elektronikeinheit 26 besteht aus mindestens den folgenden Komponenten:
- Elektronische Bauteile, die einen elektromotorischen Antrieb bestromen,
- mindestens eine Steuer- und/oder Regeleinheit
- Elektronische Bauteile, die optische Daten generieren

Wie in Figur 1 ersichtlich, ist umfasst die Beleuchtungsvorrichtung 15 einen Lichtleiter 30. Der Lichtleiter 30 ist ein transparentes Element, welches Daten beziehungsweise optische Informationen in Form von Licht transportiert. Der Lichtleiter 30 ist in Figur 1 als Lichtspange ausgeführt.

Als Lichtquelle dient eine Vielzahl von LEDs. Die LEDs können mittels Durchsteckmontage auf eine Leiterbahn montiert sein. Die LEDs können aber auch als SMD LEDs ausgeführt sein. Das von der Lichtquelle ausgesendete Licht kann unterschiedliche Farben aufweisen. Das von der Lichtquelle ausgesendete Licht kann in der Helligkeit variieren. Das von der Lichtquelle ausgesendete Licht kann ein Blinklicht sein, das periodisch die Helligkeit ändert.

Die optische Anzeigevorrichtungseinheit 10 weist eine zweite Elektronikeinheit 40 auf. Die zweite Elektronikeinheit 40 ist dazu vorgesehen, weitere Funktionen zu integrieren. So kann die zweite Elektronikeinheit 40 eine Sensoreinrichtung, eine Kommunikationseinrichtung, eine Datenverarbeitungseinrichtung, eine Speichereinrichtung, eine Energieeinrichtung, eine Identifikationseinrichtung oder dergleichen umfassen.

Somit können mindestens folgende Funktionen integriert sein:
- Messungen von Kenngrößen
- Umwandlung der Kenngrößen in Sensorsignale
- Anzeige von Kenngrößen und/oder Parametern
- Senden, Empfangen, Austauschen und/oder Speichern visueller Informationen und/oder elektronischer Daten
- Steuerung und/oder Regelung von Parametern

Die optische Anzeigevorrichtungseinheit 10 weist ein Kommunikationsmodul 50 auf. Das Kommunikationsmodul ist vorzugsweise als kabelloses Kommunikationsmodul ausgebildet. Hierbei kann das Kommunikationsmodul als WLAN-Kommunikationsmodul, als Bluetooth- Kommunikationsmodul, als Funk-Kommunikationsmodul, als RFID-Kommunikationsmodul, als NFC-Kommunikationsmodul, als Infrarot-Kommunikationsmodul, als Mobilfunknetz-Kommunikationsmodul oder dergleichen ausgebildet sein. Vorteilhafterweise ist das Kommunikationsmodul zu einer bidirektionalen Datenübertragung vorgesehen. In einer alternativen Ausgestaltung ist das Kommunikationsmodul als kabelgebundenes Kommunikationsmodul ausgebildet, wie beispielsweise als LAN-Kommunikationsmodul, als USB-Kommunikationsmodul oder dergleichen.

Die optische Anzeigevorrichtungseinheit 10 weist ein Sensormodul 60 auf. Das Sensormodul 60 ist mit einem oder mehreren Sensoren ausgestattet. Die Sensoren sind zur Erfassung einer zu bestimmenden Kenngröße oder mehrerer zu bestimmenden Kenngrößen und deren Umwandlung in ein Sensorsignal oder mehrerer Sensorsignale, vorgesehen.

Figur 3 zeigt eine als Handwerkzeugmaschine 100 ausgebildete externe Anwendungseinheit 12. Die Handwerkzeugmaschine 100 ist im Ausführungsbeispiel als Exzenterschleifer 100a ausgebildet. Das zweite Gehäuse 22 umfasst einen Motorgehäuseteil 122. An das Motorgehäuseteil 122 schließt sich ein Handgriffbereich 150 an. Der Handgriffbereich 150 ist als ein Handgriff ausgebildet beziehungsweise dient einem Bediener des Exzenterschleifers als Handgriff. Unter dem Begriff "Handgriff" soll ein Bauteil verstanden werden, um das mindestens eine Hand des Bedieners gelegt werden kann, um die Handwerkzeugmaschine 100 zu führen. Im zweiten Gehäuse 22 ist ein nicht näher dargestellter elektromotorischer Antrieb angeordnet.

Eine optische Anzeigevorrichtungseinheit 10 ist am Motorgehäuseteil 122 angeordnet. Das Motorgehäuseteil 122 hat hierbei seinen maximalen Durchmesser. Die Beleuchtungsvorrichtung 15 ist entlang des Gehäuseumfangs am maximalen Durchmesser angeordnet. Die Beleuchtungsvorrichtung 15 ist dazu vorgesehen, eine Arbeitsumgebung 124 auszuleuchten. Unter ausleuchten soll hierbei "erhellen" oder "erhellen gekoppelt mit einer Informationsübertragung" verstanden werden. Die optische Beleuchtungsvorrichtung 15 kann mit dem Motorgehäuseteil 122 durch Kleben, Rasten, Klemmen, Clipsen oder dergleichen verbunden sein.

Die Handwerkzeugmaschine 100 umfasst eine externe Elektronikeinheit 26, die mindestens dazu vorgesehen ist, einen optischen Parameter bereit zu stellen. Der optische Parameter wird über die Datenschnittstelle 24 der optischen Anzeigevorrichtungseinheit 10 übertragen.

Des weiteren kann die Anzeigevorrichtungseinheit 10 eine Sensoreinrichtung, eine Kommunikationseinrichtung, eine Datenverarbeitungseinrichtung, eine Speichereinrichtung, eine Energieeinrichtung, eine Identifikationseinrichtung oder dergleichen umfassen.

Somit können mindestens folgende Funktionen integriert sein:
- Messungen von Kenngrößen
- Umwandlung der Kenngrößen in Sensorsignale
- Anzeige von Kenngrößen und/oder Parametern
- Senden, Empfangen, Austauschen und/oder Speichern visueller Informationen und/oder elektronischer Daten
- Steuerung und/oder Regelung von Parametern

Im Ausführungsbeispiel in Figur 3 ist die Handwerkzeugmaschine 100 als Exzenterschleifer100a ausgeführt.

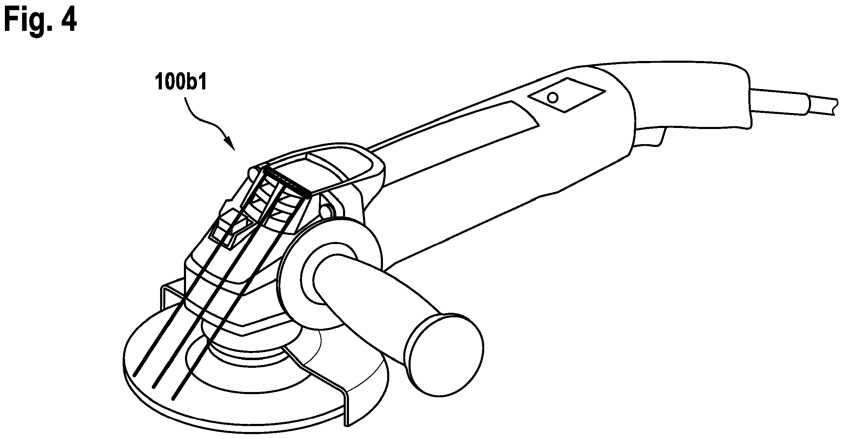

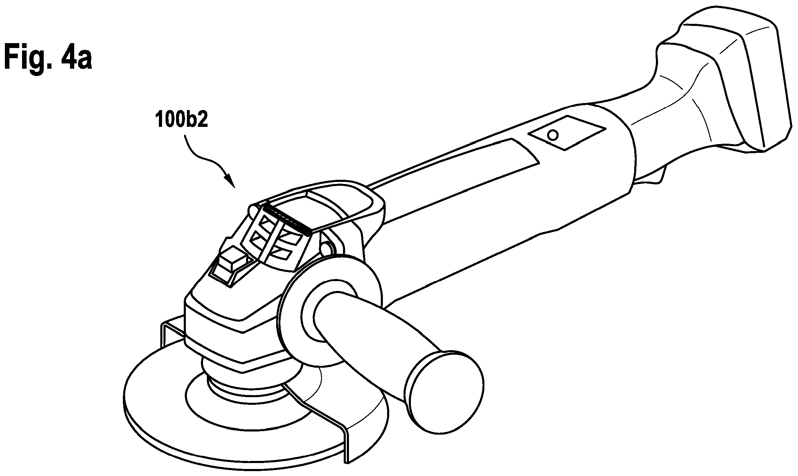

Im Ausführungsbeispiel in Figur 4 ist die Handwerkzeugmaschine 100 als Winkelschleifer 100b1 ausgeführt. Der Winkelschleifer 100b ist hierbei als Netzgerät ausgeführt.

Im Ausführungsbeispiel in Figur 4a ist die Handwerkzeugmaschine 100 als Winkelschleifer 100b ausgeführt. Der Winkelschleifer 100b2 ist hierbei als batteriebetriebene Handwerkzeugmaschine ausgeführt.

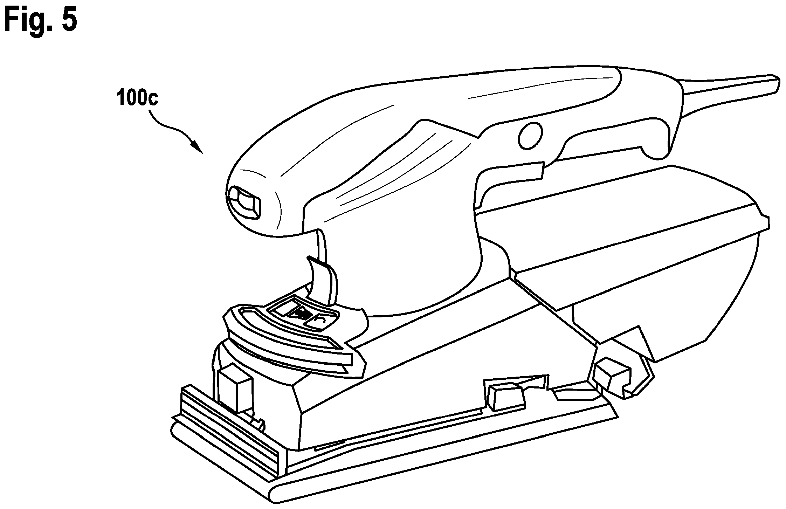

Im Ausführungsbeispiel in Figur 5 ist die Handwerkzeugmaschine 100 als Schwingschleifer 100c ausgeführt.

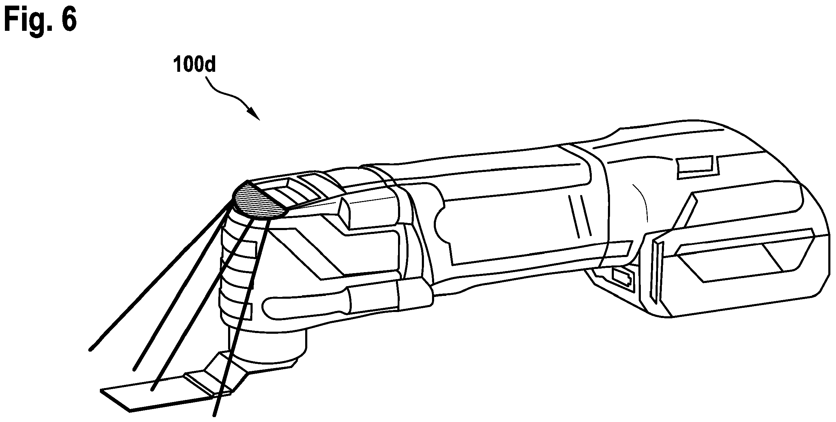

Im Ausführungsbeispiel in Figur 6 ist die Handwerkzeugmaschine 100 als oszillierendes Multitool 100d ausgeführt.

Im Ausführungsbeispiel in Figur 5 ist die Handwerkzeugmaschine 100 als Oberfräse 100e ausgeführt.

Es ist aber auch denkbar, dass die Handwerkzeugmaschine als Geradschleifer, als Elektroschaber, als Stichsäge, als Kreissäge, als Nietgerät, als Bohrhammer oder Schlaghammer, als Bohrmaschine, als Schrauber oder Schlagschrauber oder dergleichen ausgeführt ist.

## Patentansprüche

1. Optische Anzeigevorrichtungseinheit (10) zur Verwendung in einer externen Anwendungseinheit (12), wobei die externe Anwendungseinheit (12) eine Handwerkzeugmaschine ist, mit mindestens einem ersten Gehäuse (14), das mindestens eine Beleuchtungsvorrichtung und/oder mindestens eine optische Anzeigevorrichtung (16) aufweist, wobei die eine Beleuchtungsvorrichtung (15) und/oder die optische Anzeigevorrichtung (16) dazu vorgesehen sind, Informationen visuell anzuzeigen, wobei die optische Anzeigevorrichtungseinheit (10) eine mechanische Schnittstelle (20) zum Verbinden des ersten Gehäuses (14) mit einem zweiten Gehäuse (22) und eine Datenschnittstelle (24), die Informationen, an die Beleuchtungsvorrichtung (15) und/oder die optische Anzeigevorrichtung (16) überträgt, aufweist, wobei das zweite Gehäuse (22) an der Handwerkzeugmaschine (12) angeordnet ist, **dadurch gekennzeichnet, dass** die Beleuchtungsvorrichtung (15) mindestens eine Lichtquelle und einen Lichtleiter (30) umfasst, wobei eine werkzeugnahe Umgebung wie zum Beispiel ein Arbeitsfeld ausgeleuchtet werden kann, wobei der Lichtleiter als Lichtspange ausgeführt ist, wobei Licht in einem Winkel a die werkzeugnahe Umgebung ausleuchten kann, wobei der Winkel a größer 0° und kleiner als 270° beträgt.

2. Optische Anzeigevorrichtungseinheit (10) nach einem der Ansprüche 1 oder 2, **dadurch gekennzeichnet, dass** die optische Anzeigevorrichtungseinheit (10) mit verschiedenen externen Anwendungseinheiten (24), insbesondere lösbar, verbindbar ist.

3. Optische Anzeigevorrichtungseinheit (10) nach einem der vorhergehenden Ansprüche, **dadurch gekennzeichnet, dass** das zweite Gehäuse (22) eine externe Elektronikeinheit (26) aufnimmt.

4. Optische Anzeigevorrichtungseinheit (10) nach einem der vorhergehenden Ansprüche, **dadurch gekennzeichnet, dass** die optische Anzeigevorrichtungseinheit (10) mindestens eine zweite Elektronikeinheit (40) umfasst, die dazu vorgesehen, weitere Funktionen zu integrieren.

5. Handwerkzeugmaschine (100) mit einer optische Anzeigevorrichtungseinheit (10) nach einem der Ansprüche 1 bis 4, **dadurch gekennzeichnet, dass** die Handwerkzeugmaschine (100) eine externe Elektronikeinheit (26) umfasst, die dazu vorgesehen ist, einen optischen Parameter bereit zu stellen, der über eine Datenschnittstelle (24) übertragen werden kann.

6. Handwerkzeugmaschine (100) nach Anspruch 5, **dadurch gekennzeichnet, dass** die Handwerkzeugmaschine (100) als mindestens eine Handwerkzeugmaschine der folgenden Gruppe ausgebildet ist:
a. Exzenterschleifer (100a)
b. Winkelschleifer (100b)
c. Schwing- oder Deltaschleifer (100c)
d. Oszillierendes Multitool (100d)
e. Oberfräse (100e)

## Claims

1. Optical indicating device unit (10) serving for use in an external application unit (12), the external application unit (12) being a hand-held power tool, and having at least one first housing (14), which has at least one illumination device and/or at least one optical indicating device (16), wherein the one illumination device (15) and/or the optical indicating device (16) is designed to visually indicate information, wherein the optical indicating device unit (10) has a mechanical interface (20), for connecting the first housing (14) to a second housing (22), and a data interface (24), which transmits information to the illumination device (15) and/or to the optical indicating device (16), wherein the second housing (22) is disposed on the hand-held power tool (12), **characterized in that** the illumination device (15) comprises at least a light source and a light conductor (30), wherein an environment close to the tool, for example a work region, is able to be illuminated, wherein the light conductor is in the form of a light bar, wherein light at an angle a can illuminate the environment close to the tool, the angle a being greater than 0° and less than 270°.

2. Optical indicating device unit (10) according to Claim 1, **characterized in that** the optical indicating device unit (10) is able to be connected, in particular separably, to a variety of external application units (24).

3. Optical indicating device unit (10) according to either of the preceding claims, **characterized in that** the second housing (22) accommodates an external electronic unit (26).

4. Optical indicating device unit (10) according to any one of the preceding claims, **characterized in that** the optical indicating device unit (10) comprises at least one second electronic unit (40), which is designed to integrate further functions.

5. Hand-held power tool (100) having an optical indicating device unit (10) according to any one of Claims 1 to 4, **characterized in that** the hand-held power tool (100) comprises an external electronic unit (26), which is designed to provide an optical parameter that can be transmitted via a data interface (24).

6. Hand-held power tool (100) according to Claim 5, **characterized in that** the hand-held power tool (100) is realized as at least one hand-held power tool of the following group:
a. random-orbit sander (100a)
b. angle grinder (100b)
c. orbital or delta sander (100c)
d. oscillating multitool (100d)
e. router (100e).

## Revendications

1. Unité de dispositif d'affichage optique (10) pour une utilisation dans une unité d'application externe (12), l'unité d'application externe (12) étant une machine-outil à main comprenant au moins un premier boîtier (14) qui présente au moins un dispositif d'éclairage et/ou au moins un dispositif d'affichage optique (16), ledit un dispositif d'éclairage (15) et/ou le dispositif d'affichage optique (16) étant prévu(s) pour afficher visuellement des informations, l'unité de dispositif d'affichage optique (10) présentant une interface mécanique (20) pour relier le premier boîtier (14) à un deuxième boîtier (22) et une interface de données (24) qui transmet les informations au dispositif d'éclairage (15) et/ou au dispositif d'affichage optique (16), le deuxième boîtier (22) étant disposé sur la machine-outil à main (12),
**caractérisée en ce que** le dispositif d'éclairage (15) comprend au moins une source de lumière et un guide d'ondes optiques (30), dans laquelle un environnement près de l'outil, comme par exemple un champ de travail, peut être éclairé, le guide d'ondes optiques étant réalisé sous forme de barrette de lumière, de la lumière selon un angle a pouvant éclairer l'environnement près de l'outil, l'angle a étant supérieur à 0° et inférieur à 270°.

2. Unité de dispositif d'affichage optique (10) selon l'une quelconque des revendications 1 ou 2, **caractérisée en ce que** l'unité de dispositif d'affichage optique (10) peut être reliée à différentes unités d'application externes (24), en particulier de manière amovible.

3. Unité de dispositif d'affichage optique (10) selon l'une quelconque des revendications précédentes, **caractérisée en ce que** le deuxième boîtier (22) reçoit une unité électronique externe (26).

4. Unité de dispositif d'affichage optique (10) selon l'une quelconque des revendications précédentes, **caractérisée en ce que** l'unité de dispositif d'affichage optique (10) comprend au moins une deuxième unité électronique (40) qui est prévue pour intégrer d'autres fonctions.

5. Machine-outil à main (100) comprenant une unité de dispositif d'affichage optique (10) selon l'une quelconque des revendications 1 à 4, **caractérisée en ce que** la machine-outil à main (100) comprend une unité électronique externe (26) qui est prévue pour fournir un paramètre optique qui peut être transmis par une interface de données (24).

6. Machine-outil à main (100) selon la revendication 5, **caractérisée en ce que** la machine-outil à main (100) est réalisée comme au moins une machine-outil à main issue du groupe suivant :
a. une ponceuse excentrique (100a),
b. une meuleuse d'angle (100b),
c. une ponceuse orbitale ou delta (100c),
d. un outil polyvalent oscillant (100d),
e. une défonceuse (100e).
